# EUROPEAN PATENT APPLICATION

(11) **EP 2 860 679 A1**
(43) Date of publication of application: **15.04.2015**
(21) Application number: 14188547.5
(22) Date of filing: 10.10.2014
(51) Int. Cl.: G06Q 10/10

(54) **Selective sharing of electronic information**

(30) Priority: 11.10.2013 US 201361889929 P; 09.10.2014 US 201414511140
(71) Applicant: Prolifiq Software Inc., Beaverton, OR 97008 (US)
(72) Inventor: Huynh, Hemingway, Beaverton, OR 97008 (US); Huynh, Anh, Beaverton, OR 97008 (US); Wong, Isabella, Beaverton, OR 97008 (US); Farnsworth, Jeffrey Michael, Beaverton, OR 97008 (US)
(74) Representative: Moore, Barry

(57) **Abstract**

Methods, apparatuses, systems, and computer-readable media for facilitating individualized data alerts are described herein. Information sources may provide data for publication to knowledge professionals. Managerial actions may be performed by an individual or automatically. After the data is published, one or more individualized alerts may be sent to knowledge professionals, such as on a mobile device under control of the knowledge professional, leading to presentation of the pieces of data, along with assigned actions. Knowledge professionals may accept assignment of actions, may re-assign actions, may review actions, and may indicate when actions have been taken. These indications may then be used to update data generators or the data manager, such that future pieces of data and/or individualized alerts may be provided. Other embodiments may be described and/or claimed.

## Description

### Cross Reference to Related Application

The present application claims priority to U.S. Provisional Patent Application No. 61/889,929, titled "Managed Data Publication," which was filed on October 11, 2013, the entire disclosure of which is hereby incorporated by reference.

### Background

The background description provided herein is for the purpose of generally presenting the context of the disclosure. Unless otherwise indicated herein, the materials described in this section are not prior art to the claims in this application and are not admitted to be prior art by inclusion in this section.

Service professionals, such as physicians, service providers, and other information workers are frequently in need of updated industry information (such as about techniques, equipment, pharmaceuticals, standards of care, etc.) in order to better perform their services. However, it is often difficult for professionals to maintain an up-to-date knowledge of advances and discoveries in their field. Frequently, in order to aid these professionals in developing their knowledge and skills, other knowledge professionals, such as pharmaceutical sales representatives, may facilitate the provisioning of information to the service professionals. However, performing this facilitation may itself be a difficult task. This is particularly made more difficult when state-of-the-art knowledge is changing quickly or regularly.

### Summary

Accordingly there is provided a method, apparatus and computer readable medium for facilitating sharing of information in accordance with the independent claims. Advantageous features are detailed in the dependent claims.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the Figures of the accompanying drawings.
Figure 1 illustrates an example arrangement for content distribution and consumption, in accordance with various embodiments.
Figure 2 illustrates an example process for managed data publication, in accordance with various embodiments..
Figure 3 illustrates an example process for receiving data updates, in accordance with various embodiments.
Figure 4 illustrates an example process for managing and publishing managed data, in accordance with various embodiments.
Figures 5-7 illustrate example user interfaces utilized during management and publishing of managed data, in accordance with various embodiments.
Figure 8 illustrates an example process for alerting a knowledge professional with published managed data, in accordance with various embodiments.
Figures 9-15 illustrate example user interfaces utilized in relation to alerts for knowledge professionals, in accordance with various embodiments.
Figure 16 illustrates an example computing environment suitable for practicing various aspects of the present disclosure in accordance with various embodiments.
Figure 17 illustrates an example storage medium with instructions configured to enable an apparatus to practice various aspects of the present disclosure in accordance with various embodiments.

### Detailed Description

Embodiments described herein are directed to, for example, methods, apparatuses, systems, and computer-readable media for facilitating individualized data alerts to users, such as knowledge professionals. In various embodiments, one or more information sources may provide data for publication to knowledge professionals. The data may be provided in various forms, such as recurring feeds, downloaded files, manual updating of data, via social media, via a webpage, etc.. In various embodiments, the data may be presented to a data manager, who may review the data, may identify recipients of the data, may assign actions to recipients, etc. In some embodiments, the data manager may be an individual. In various embodiments, the managerial actions may be performed on an individual basis with reference to individual pieces of data, or may be performed on a group of pieces of data. In various embodiments, the data manager may also route the data to another data manager for review and management. In some embodiments, however, no data manager may be used, and managerial actions may be performed automatically. After performing managerial actions, the manager may allow publication of the data. After the data is published, one or more individualized alerts may be sent to knowledge professionals, such as on a mobile device under control of the knowledge professional. These individualized alerts may include all or part of the data that is published, and may take various forms, including textual, sound, and numerical indications, and may have particularized information associated with them. These individualized alerts may lead to presentation of the pieces of data, along with the assigned actions. Knowledge professionals may accept assignment of actions, may re-assign actions to other people, may review their own or others' actions, and may indicate when actions have been taken. These indications may then be used to update data generators or the data manager, such that future pieces of data and/or individualized alerts may be provided in the wider context of completed actions or other information. In some cases business rules may be applied to provided data and/or action indications in order to determine additional individualized alerts and/or publication.

It may be noted that, while embodiments described herein discuss publication of data to knowledge professionals, in some embodiments, publication may be performed to a service or system. For example, publication may be made to a system that may print, or otherwise make available, published information.

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "logic" and "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

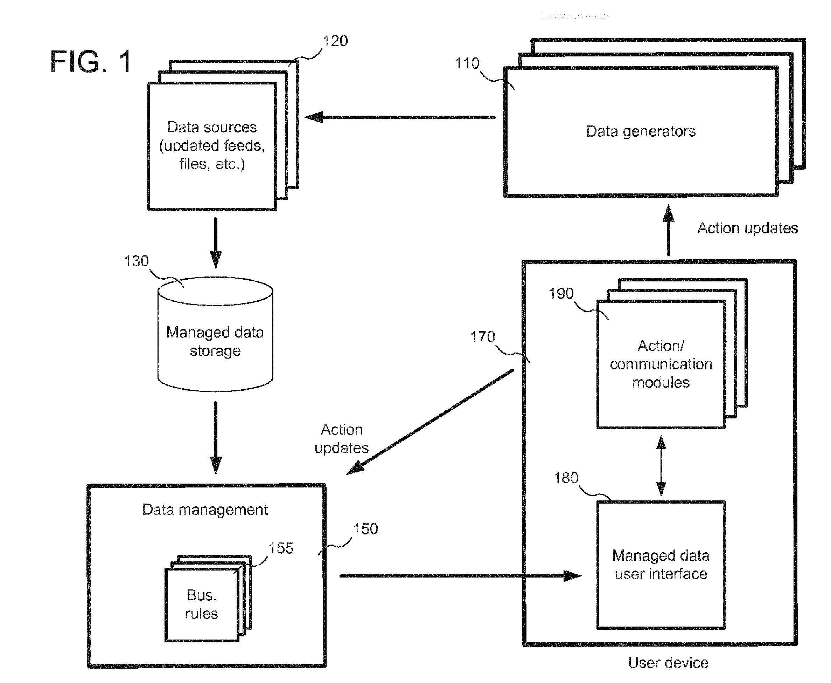

Referring now to Fig. 1, an arrangement for content distribution and consumption, in accordance with various embodiments, is illustrated. As shown in Fig. 1, various data sources 120 may provide data to a managed data storage 130. In various embodiments, these data sources 120 may be provided by one or more data generators 110 that have data that may be provided to service professionals, such as through knowledge professionals. For example, the data sources 120 may be provided by data generators 110 such as pharmaceutical manufacturers for provisioning to sales representatives; the sales representatives may then facilitate sharing of the data with physicians or other medical professionals. In other embodiments, techniques described herein may be utilized for provisioning of other types of information or other types of data generators 110, such as medical device manufacturers or manufacturers of other products or producers of other information. In various embodiments, the data provided from the data generators 110 may include data on various subjects, including, for example, but not limited to, information about prescription pharmaceuticals or medical devices. It may be noted that, while the managed data storage 130 is illustrated as a storage device for the purposes of illustration, in various embodiments, the managed data storage 130 may include one or more computing devices to manage receipt and storage of data.

The data sources 120 (provided by the data generators 110) may, in various embodiments, include various technologies for provisioning of data. For example, in some embodiments, a data source 120 may include one or more feeds that provides updated data, such as an RSS or other updatable feed technology. Data may be provided in various formats, such as, for example XML. In some embodiments, the managed data storage 130 may be configured to periodically request updated data from the feeds. In some embodiments, the data sources 120 may include one or more files that may be uploaded directly to (or downloaded by) the managed data storage 130. For example, in some embodiments, a file of data updates, such as a spreadsheet, may be uploaded using FTP, secure FTP (sFTP), or other technology to the managed data storage 130. In other embodiments, data may be provided through other means, such as from a website, through a web service or other API, or through other forms of server-server communication. In other embodiments, data may be provided to the data storage via manual update, such as by one or more users entering data by hand. In various embodiments, a data generator 110 may utilize a single data source 120, or may utilize multiple data sources 120, in order to provide information for service professionals.

In various embodiments, a data management module 150 ("DMM 150") may be configured to obtain data from the managed data storage 130 and to provide the data for publishing to one or more knowledge professionals. In embodiments, prior to publishing, the DMM 150 may be configured to facilitate display of the data (and/or of summaries or metadata about the data) to a data manager. The data manager may be facilitated by the DMM 150 in controlling access to the data by one or more knowledge professionals. In various embodiments, the DMM 150 set one or more pieces of data to trigger individualized alerts for knowledge professionals, such as on the devices of the knowledge professionals. In another example, the DMM 150 may facilitate modification of one or more pieces of data. In various embodiments, the use of the term "alert" herein should not be read to require or limit embodiments to any particular form of alert. Alerts may include all or part of the data that is published and/or selected for sending to particular knowledge professionals, and may take various forms, including textual, audible, and numerical indications, and may have particularized information associated with them.

In another example, the DMM 150 may facilitate assigning one or more actions to be associated with a piece of data and/or to be performed by particular knowledge professionals. The DMM 150 may also be configured to allow selective publishing of the data to particular knowledge professionals, such that the data manager may control rate and/or timing of release of information to the knowledge professionals; this selective publication and selection of knowledge professionals may serve to better individualize the alerts to the particular knowledge professionals. In some embodiments, the DMM 150 may also allow assignment of specific content to actions or recommendations. The DMM 150 may also facilitate obtaining of content from other sources, which may, in turn, trigger additional actions. The DMM 150 may also facilitate combination of information from disparate data sources, such as by combining information about similar topics, or which was generated by similar data generators. As such, the DMM 150 may facilitate dynamic content generation during managed data generation.

In various embodiments, the various actions of the DMM 150 may be mediated by actions of a data manager. In various embodiments, the actions of the DMM 150 may be generated through automatic action of one or more business rules 155. In various embodiments, the business rules may be configured to be applied by the DMM 150 to the published data and/or the data updates received from various knowledge professionals. Through such application of the business rules, the DMM 150 may provide for the determination of alerts that may be generated for particular information, generation of alerts, assignment of actions to be performed by knowledge professionals, modification of data before publication, combination of information from different data sources, etc. For example, an alert may provide new information about a drug that that may be shared with a physician by a pharmaceutical representative. This alert may then be passed on to a medical specialist for follow-up by the pharmaceutical representative. In another example, information about a particular patient group, such as the fact that a certain number of people in a patient panel have a particular disease, in order to facilitate a knowledge professional in contacting and providing appropriate information to the physician in charge of that patient panel. In various embodiments, assigned actions may include multiple related actions and may include recommended actions that may be performed based on actions or responses of a third party, such as a physician or other service professional. Thus, in one example, a pharmaceutical representative may be suggested to first email a physician about a new drug and may secondarily be given a series of responses to utilize based on the physician's response to the email. In other examples, recommended secondary actions may be based on actions taken by other knowledge professionals or other third parties.

Upon publication, published data may be sent to a user device 170 under the control of, or otherwise associated with, a knowledge professional. In various embodiments, the user device 170 may include a smartphone, tablet computer, laptop computer, desktop computer, and/or other computing devices. The published data may be sent via a variety of networks and/or other communication protocols, such cellular data network, WiFi networks, Bluetooth, the Internet, etc. As illustrated in Fig. 1, the user device 170 may also be configured with a managed data user interface module 180 ("MDUI 180") which may be configured to receive and display all or part of the data that has been published by the DMM 150. In various embodiments, the MDUI 180 may be configured to facilitate occurrence of one or more visual and/or audio alerts at the user device 170 in association with publication of the data. In some embodiments, the occurrence of one or more alerts may be facilitated by an operating system or other software on the user device 170 that is configured to cause display or other occurrence of alerts.

In addition to facilitating occurrence of alerts, the MDUI 180 may be configured to facilitate display of all or part of the published data to a knowledge professional associated with the user device 170. Particular examples of display of data are described below. In various embodiments, the display may include updated data itself, as well as one or more actions associated with the data and/or knowledge professional associated the user device 170. In various embodiments, the MDUI 180 may be configured to display data and/or actions associated with other knowledge professionals, or which are associated with no knowledge professional, such as unassigned actions. In various embodiments, the MDUI 180 may also be configured to allow knowledge professionals to accept actions, re-assign actions, and/or to mark actions as completed. In various embodiments, the MDUI 180 may be configured to communicate with one or more action/communication modules 190 which may be configured to facilitate communication, such as with service professionals (e.g., physicians or other health care providers) as well as to perform other communication actions. The MDUI 180 may also be configured to facilitate triggering of outside actions such as sending managed data to a print fulfillment house, provisioning of prescription samples to a service professional, utilizing event reservation systems, as well sending data to other communication technologies, such as social media services or web pages.

Based on performance of these actions, action updates may be generated, such as, for example, updates showing that particular pieces of data have been shared with service professionals or that alerts or actions have been cleared. Updates may in various embodiments, include data that has been shared, alerts that have been delivered, actions that have been formed, identities (or other information) for service professionals with whom data was shared, etc. These updates may then be shared with various entities in order to allow for updates in the manner in which data is generated, shared, or managed. For example, in various embodiments, the action updates may be shared with the data generators 110, in order for the data generators 110 to modify the data which they send through the data sources 120, which may then, in turn, update the data provided to the managed data storage 130. In various embodiments, the action updates may be shared with the DMM 150, in order that the DMM 150 may modify management of data received from the data sources 120. Thus, by receiving updates, the DMM 150 may modify generation of alerts and/or publication of data to better facilitate knowledge professionals in providing data to service professionals.

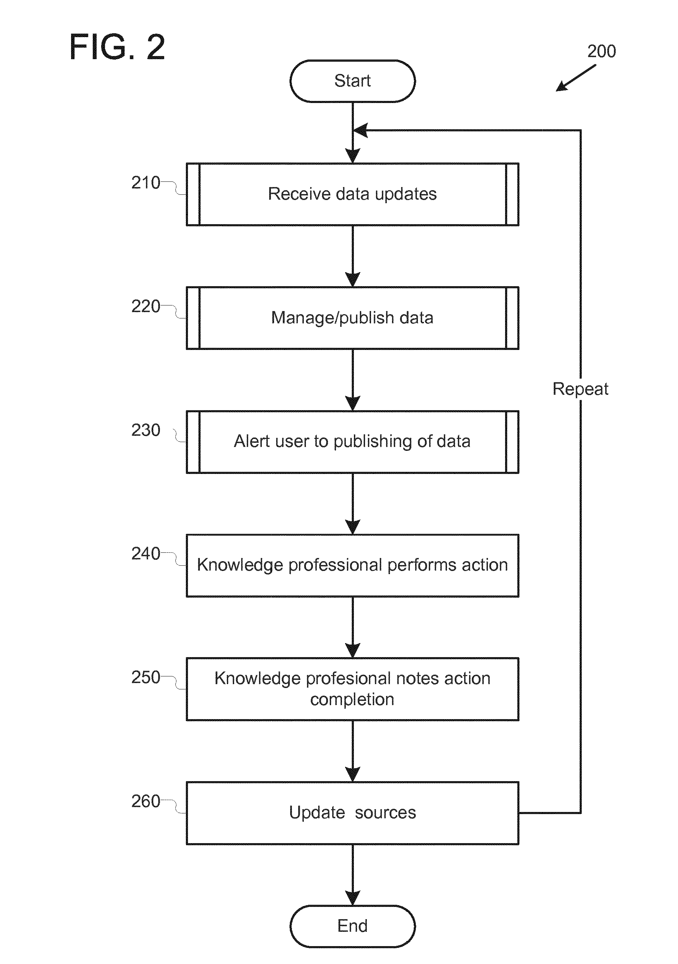

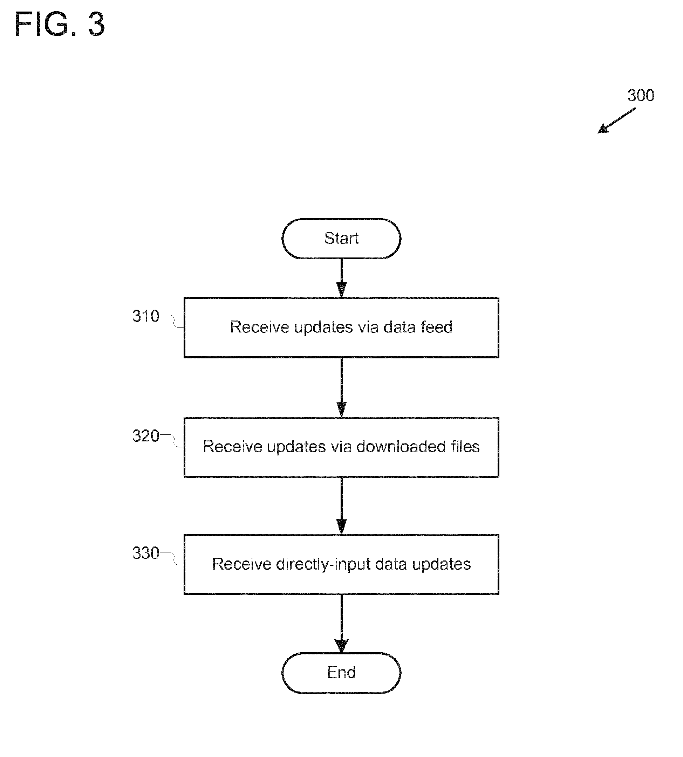

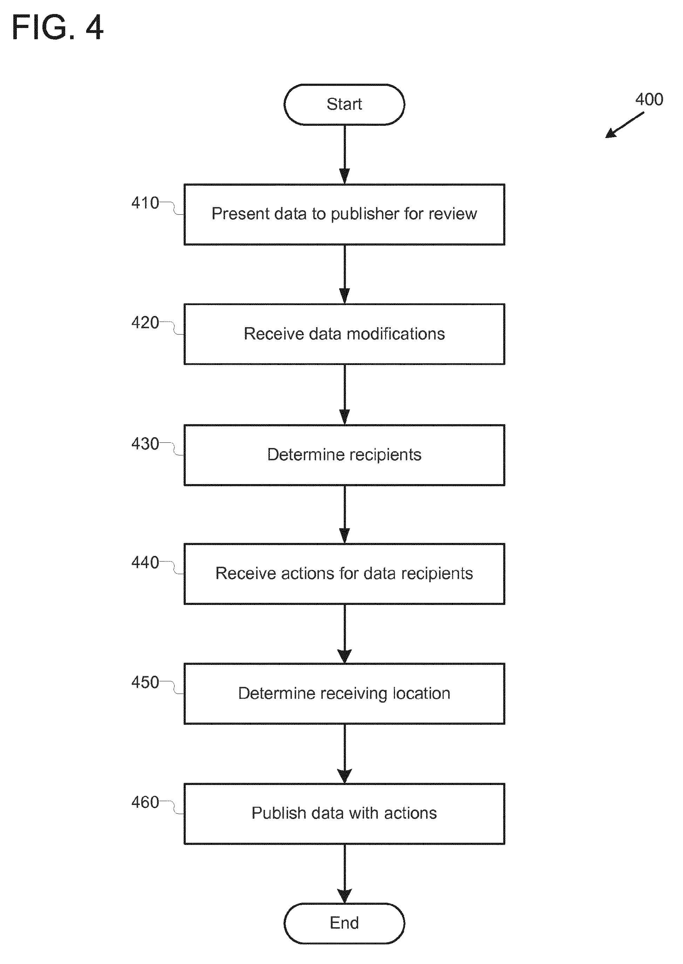

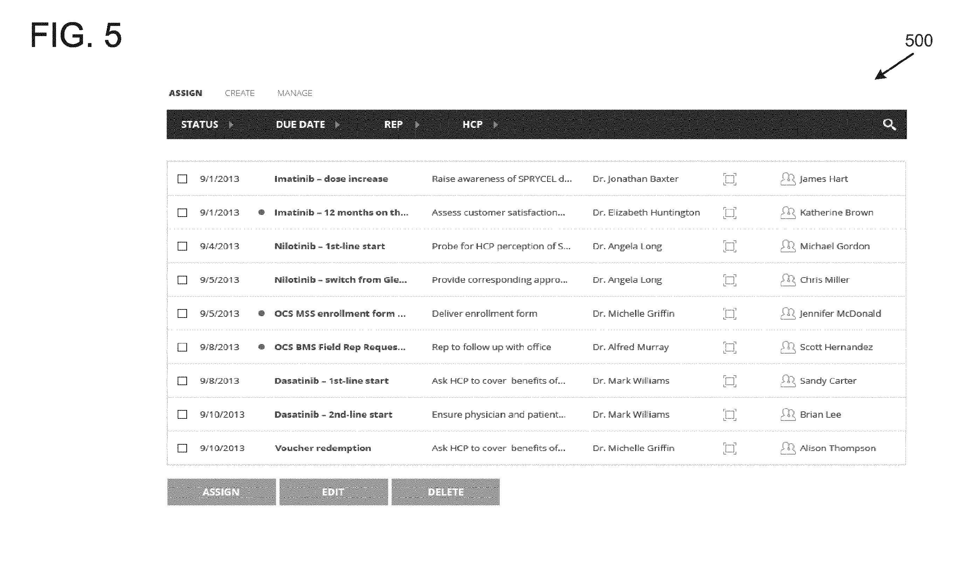

Referring now to Fig. 2, an example process 200 for managed data publication is illustrated in accordance with various embodiments. While Fig. 2 illustrates particular example operations, in various embodiments, the process may include additional operations, omit illustrated operations, and/or combine illustrated operations. The process may begin at operation 210 by the managed data storage 130 receiving one or more data updates. Particular embodiments of receiving data updates are described below with reference to process 300 of Figure 3. Next, at operation 220, the DMM 150 may facilitate a data manager in managing and publishing data. Particular embodiments, of managing and publishing data are described below with reference to process 400 of Figure 4. Next, at operation 230, a knowledge professional may be alerted to the publishing of the data by a data source, such as in the DMM 150. Particular embodiments of user alerts are described below with reference to process 500 of Figure 5. Next, at operation 240, the knowledge professional may perform one or more actions. In some embodiments, the action may be completed by one or more actions of communicating information to a service professional, such as by forwarding a piece of published managed information, speaking to a service professional, visiting a service professional, etc. In other embodiments, other actions may be facilitated. The knowledge professional may note action completion in the DMM 150 at operation 250.

Next, at operation 260, data generators 110 and/or the DMM 150 may be updated with the completed actions. Additionally, reporting and action tracking may be performed. For example, information such as which knowledge professionals acted on actions, which service professionals used recommendations, what types of execution were performed, etc. may be collected after updates and may be reported back. Such reporting may be performed to a data manager, such as through the DMM 150. The process may then repeat, or may then end.

Referring now to Fig. 3, an example process 300 for receiving data updates is illustrated in accordance with various embodiments. While Fig. 3 illustrates particular example operations, in various embodiments, the process may include additional operations, omit illustrated operations, and/or combine illustrated operations. The process may begin at operation 310, where the managed data storage 130 may receive one or more data updates via a data feed, such as an RSS or Atom feed. In various embodiments, these data updates may be provided in various formats, such as, but not limited to, HTML, XML, or other formats. In some embodiments, a web page that is periodically updated may be utilized to provide one or more data updates. At the operation 320, the managed data storage 130 may also (or in lieu of the above action) receive one or more data updates via downloaded or uploaded files, such as spreadsheets or other files that contain data updates. These files may be provided via upload and/or download from a data source 120, such via FTP, file synchronization services (such as Dropbox), etc. At operation 330 the managed data storage 130 module may receive directly-input data updates. For example, a user associated with a data source 120 may directly enter data, such as from paper information sources. In other embodiments, data may be scanned and recognized from paper sources, or input based on other published information, such as on a website. After receipt of data updates, by whichever means, the process may end.

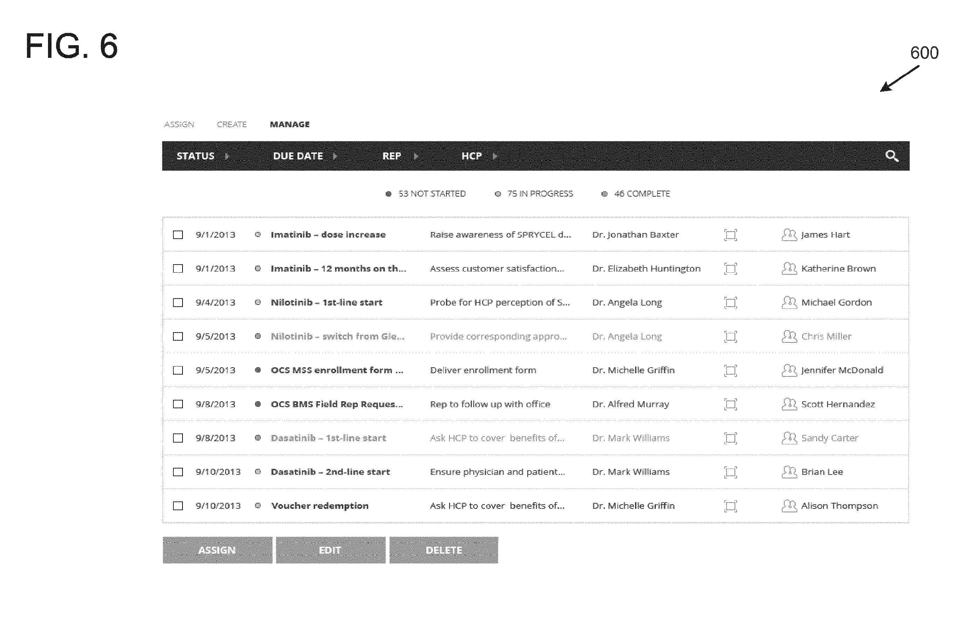

Referring now to Fig. 4, an example process 400 for managing and publishing managed data is illustrated in accordance with various embodiments. While Fig. 4 illustrates particular example operations, in various embodiments, the process may include additional operations, omit illustrated operations, and/or combine illustrated operations. The process may begin at operation 410 where the data is presented to a data manager for review. In various embodiments multiple pieces of data may be presented together to a data manager. For example, Fig. 5 shows an example user interface 500, such as may be provided by the DMM 150, for presenting data to a data manager for review. As shown in the example of Fig. 5, each piece of data may include information such as a title, suggestion action, due date, suggested service professional, etc. In other embodiments, other information may be shown and associated with particular managed data. The example of Fig. 5 also illustrates actions that may be performed with respect to a piece of data, such as assigning the piece of data (and/or action) to a particular knowledge professional ("ASSIGN"), performing one or more modifications to the data ("EDIT"), or deleting a piece of data ("DELETE"). It may also be noted that, in the example of Fig. 5, individual pieces of data may be selected by the data manager for inclusion in a batch action, such as a batch edit or batch assignment to an knowledge professional. Fig. 6 shows a similar example to that of Fig. 5, including indications for the data manager of which pieces of data have completed, in process, or not-yet-started actions.

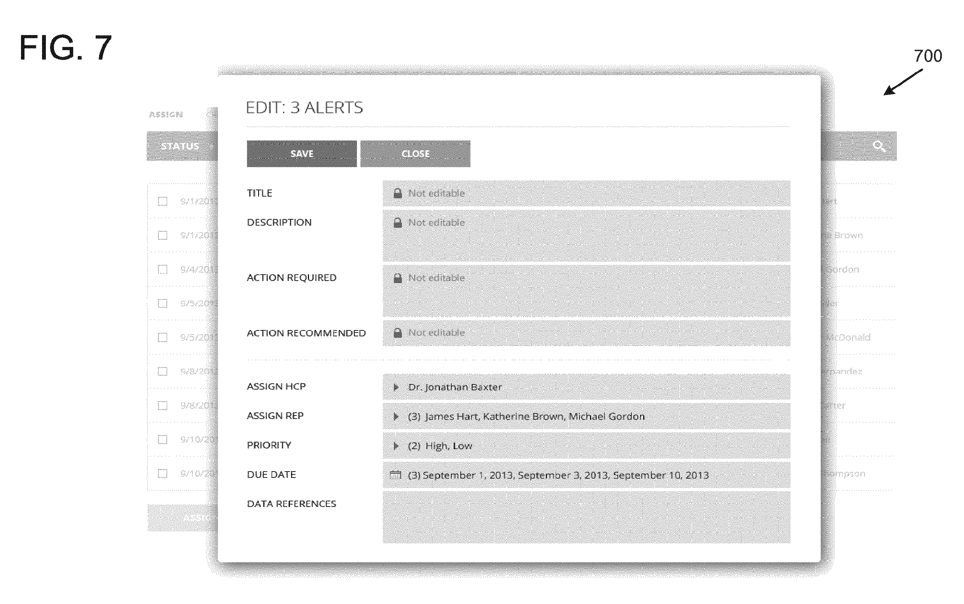

Returning to Fig. 4, next, at operation 420 the DMM 150 may receive one or more data modifications, such as from the data manager. Thus, in the example of Fig. 4, the data manager may activate the "EDIT" user interface element to indicate that he or she wishes to modify a piece of data. Fig. 6 shows an example user interface for editing data. As shown in the example, one or more parts of the data may be presented, including title, description, action required, action recommended, assigned service professional (in the example, "ASSIGN HCP"), assigned knowledge professional (in the example, "ASSIGN REP"), priority, due data, and/or references. Additionally, as shown in the example of Fig. 7, one or more of the presented data parts may be protected or otherwise not be editable (such as, in the example, Title, Description, action required, and action recommended). It may also be noted that, in various embodiments, some parts of data may allow for more than one piece of information. For example, multiple knowledge professionals may be assigned to a particular piece of information. In some embodiments, these knowledge professionals may be facilitated in assigning themselves to particular pieces of data and/or actions. Similarly, in some embodiments, multiple due dates may be assigned to a particular piece of data, such as when multiple actions may be required and/or recommended.

Returning to Fig. 4, at operation 430 the DMM 150 may determine one or more recipients for the data. In some embodiments, recipients for the data may be suggested by the DMM 150 based on information in the piece of data. This recommendation may be to send the data to knowledge professionals based on their contacts with particular service professionals. For example, if a piece of data comes from a pharmaceutical manufacturer and relates to the prescription of a particular drug for a particular type of patient, the DMM 150 may suggest, for example, pharmaceutical representatives that work with those particular types of patients. In another example, knowledge professionals may be recommended by the DMM 150 based on their familiarity with the subject matter of the piece of data or other factors related to the piece of data. In other embodiments, knowledge professionals may be recommended by the DMM 150 for reasons unrelated to the piece of data, such as past success rate, current workflow resources, willingness to travel to a service professionals, etc. In other embodiments, the DMM 150 may not make determinations of recipients, but may instead receive assignments from another party, such as the data manager, or may present recommendations to the data manager for review and possible modification.

In addition to determining recipients, as illustrated in Fig. 4, the DMM 150, at operation 440, may receive actions for the data recipients. In some embodiments, these actions may be received directly with the piece of data itself. In other embodiments, the data manager may provide particular actions, as described herein. As illustrated in Fig. 4, the DMM 150 may also determine a receiving location at operation 450. In various embodiments, this receiving location may simply be the user device 170 of the knowledge professional that is to receive the piece of information. In other embodiments, however, the recipient location may be a third party location, such as a messaging or copy center, or a printer, where information can be sent and retrieved by a recipient. Finally, at operation 460 the DMM 150 may cause the data (along with any action associated with it) to various recipients. The process may then end.

It may be recognized as well that, while process 400 was described with reference to actions of a data manager, in various embodiments, one or more of the actions of process 400 may be performed automatically by the DMM 150. In particular, in various embodiments, the DMM 150 may be configured to apply one or more of the business rules 155 to the data feeds, as well as to information about service professionals, knowledge professionals, and/or received updates to perform the actions of process 400. Thus, the DMM 150 may, in various embodiments, perform one or more of: determining data modifications (operation 420), determining one or more recipients (operation 430), determining actions for data recipients (operation 440), determining receiving locations (operation 450), and/or publishing of data with actions (operation 460) based on application of these business rules to the information available to the DMM 150.

Particular implementations of the business rules themselves, as well as their application to the to the data feeds, as well as to information about service professionals, knowledge professionals, and/or received updates may be understood by those of ordinary skill, but various example embodiments follow. In various embodiments, the business rules 155 may be applied to information based on knowledge professional information gained from interaction with service professionals.

For example, after or during a visit with a physician, a pharmaceutical representative may note that the physician is planning to have four new incoming melanoma patients or that the physician is interested in learning more about dosing for a particular drug. The business rules 155 may be applied by the DMM 150 to these notes to trigger an alert for the representative or other knowledge professionals that interact with that physician or other similarly situated physicians.

In another example, if a physician indicates that they will participate in a particular event (either online or in person), the DMM 150 may apply the business rules 155 to that response and, as a result, may systematically tag or capture similar events that physician should be recommended for. The DMM 150 may then, in turn generate alerts for a knowledge professional to provide recommendations for these events

In yet another example, polls maybe generated by the DMM and sent to one or more knowledge professionals regarding service professionals. Based on application of the business rules 155 to the received colleague input, the DMM 150 may generate alerts for knowledge professionals based on their contact lists. For example, a poll may be sent out to pharmaceutical representatives about who is the "key stakeholder" at a particular hospital. If the largest response is that a "Dr. Smith" is the key opinion leader or decision maker, the DMM 150 may tie that information to future data collected about the hospital. Further representatives assigned to Dr. Smith may receive alerts from the DMM 150 with activities or recommendations that they may act upon.

In another example, the DMM 150 may apply the business rules 155 to calendar changes for the knowledge professionals and/or service professionals to generate alerts or publish data that is better aligned with the modified calendars.

In yet another example, the DMM 150 may apply the business rules 155 to content types. Thus, content types that are associated to a knowledge professional may generate alerts after application of the business rules. For example, if a physician requests a reimbursement guide with, there are changes to insurance or formulary acceptance for a particular drug, an alert may be generate to particular reimbursement/payer access teams to act upon. with relation to the physician.

In yet another example, as mentioned, the DMM 150 may apply business rules to information regarding communications. Thus if a knowledge representative initiates a request to to find a specialist to speak to a service representative, particular alerts may be generated.

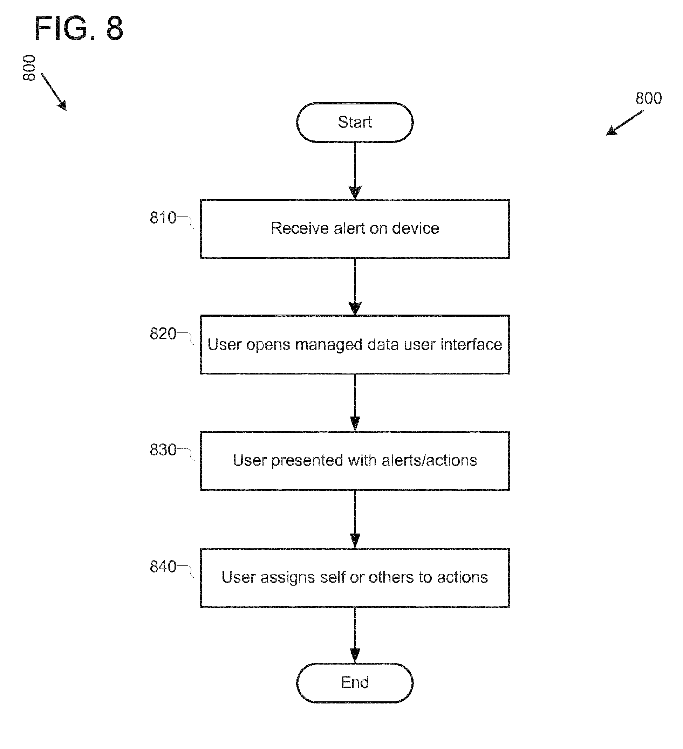

Returning to the figures, and referring now to Fig. 8, an example process 800 for alerting a knowledge professional with published managed data is illustrated in accordance with various embodiments. While Fig. 8 illustrates particular example operations, in various embodiments, the process may include additional operations, omit illustrated operations, and/or combine illustrated operations. The process may begin at operation 810, where the user device 170 for the knowledge professional may receive an alert on the device, such as from the DMM 150. In various embodiments, the alert may be received in a manner consistent with other alerts received on the device, such as by a push-based alert system facilitated by an operating system or other software on the user device 170. In other embodiments, the alert may be facilitated by software specific to the MDUI 180 or other software.

As illustrated in the example of Fig. 8, at operation 820, after receiving an alert, the knowledge professional may then open the managed data on the user device 170. The knowledge professional may then, at operation 830, be presented with one or more pieces of data and/or actions that may be performed by the knowledge professional. In various embodiments, the knowledge professional that received the data may then, at operation 840, assign themselves to a particular action that is associated with a piece of published managed data. In some embodiments, the knowledge professional may re-assign another knowledge professional to a particular action. In some embodiments, if the knowledge professional elects to re-assign an action, the MDUI 180 may display an intelligent directory that facilities re-assignment. The MDUI 180 may be configured such that the intelligent directory includes those actions with may be re-assigned, to which other knowledge professionals the actions may be re-assigned, which types of alerts may be utilized, etc. In various embodiments, one or more rules may be known by the MDUI 180 and may be applied based on information in the managed data to determine which options are presented to the knowledge professional in the intelligent directory. In some embodiments, one or more actions may not be assignable by any receiving knowledge professional; such actions may come pre-assigned to a particular knowledge professional. The process may then end.

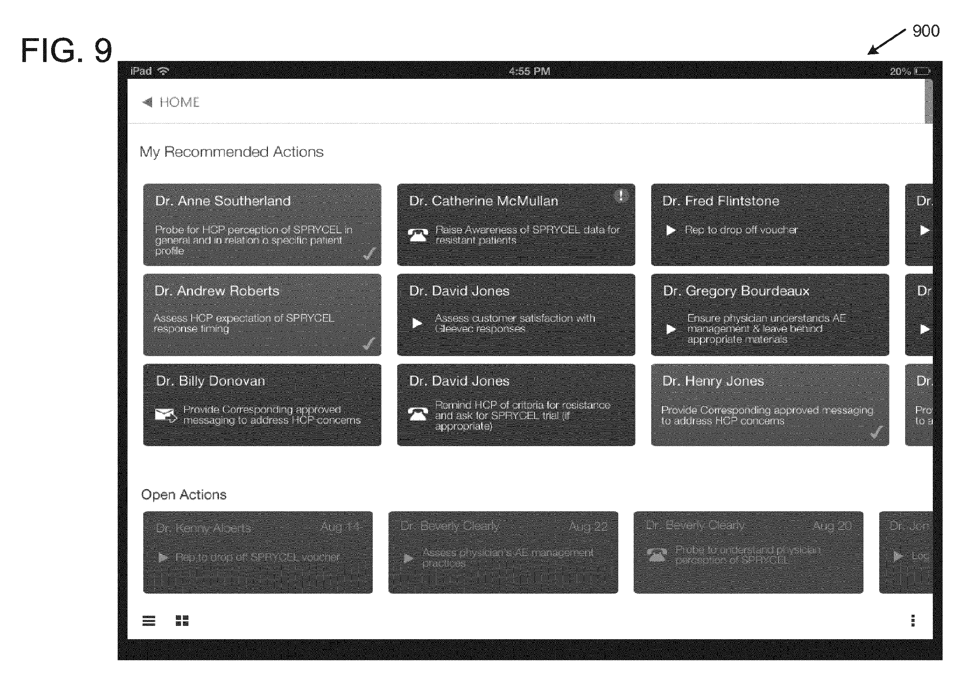

Examples of user interfaces of the MDUI 180 that are configured to present managed data to a knowledge professional may be found at Figs. 9-15. In the example of Fig. 9, tiles with various actions are illustrated for review in the MDUI 180 by a knowledge professional. Each of the illustrated tiles indicates a service professional for which an action may be performed. Additionally, those actions that have been completed may show an indication of such completion, for example the green checkmark. In some embodiments, as illustrated, icons (such as phone or envelope icons) may be used to illustrate that particular actions may be performed by phone or by mail/email. Additionally, the user interface illustrated in Fig. 9 also shows various tiles as being recommended actions (meaning they are recommended for a particular receiving knowledge professional) and/or open actions (meaning they have been accepted by the receiving knowledge professional for performance but have not been completed.

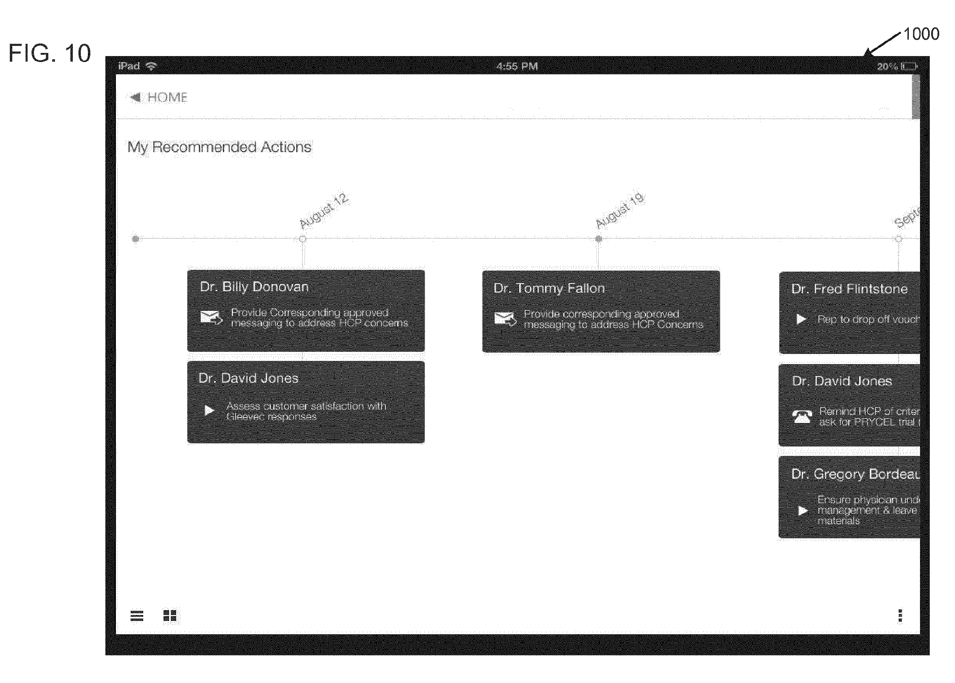

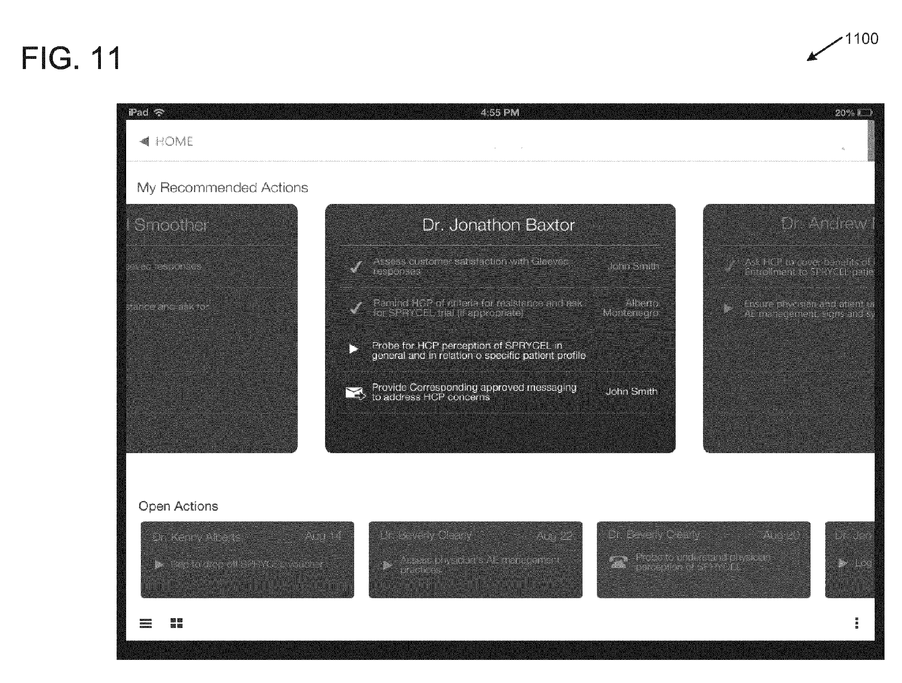

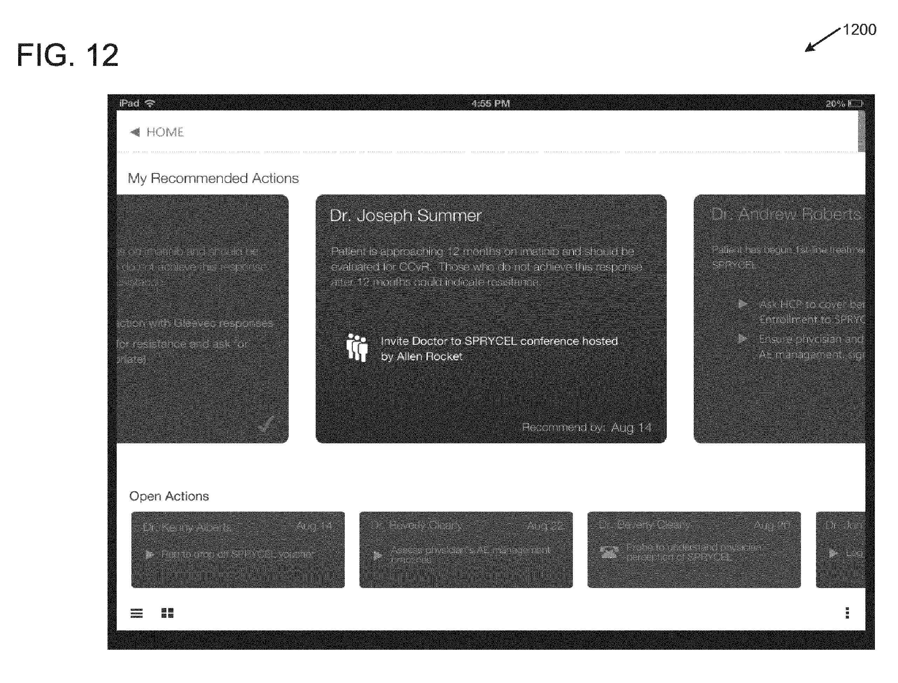

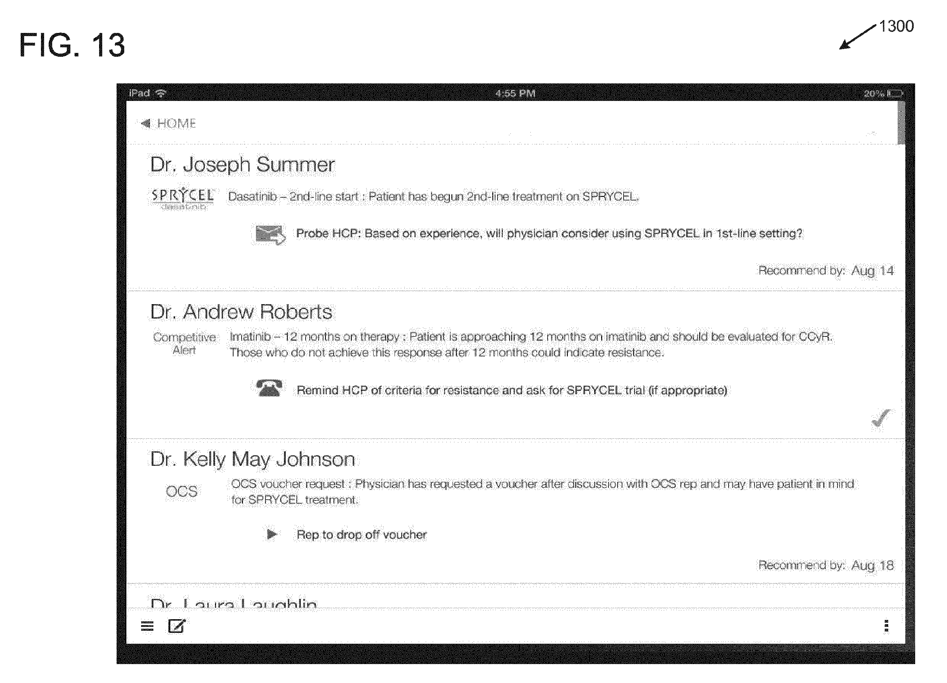

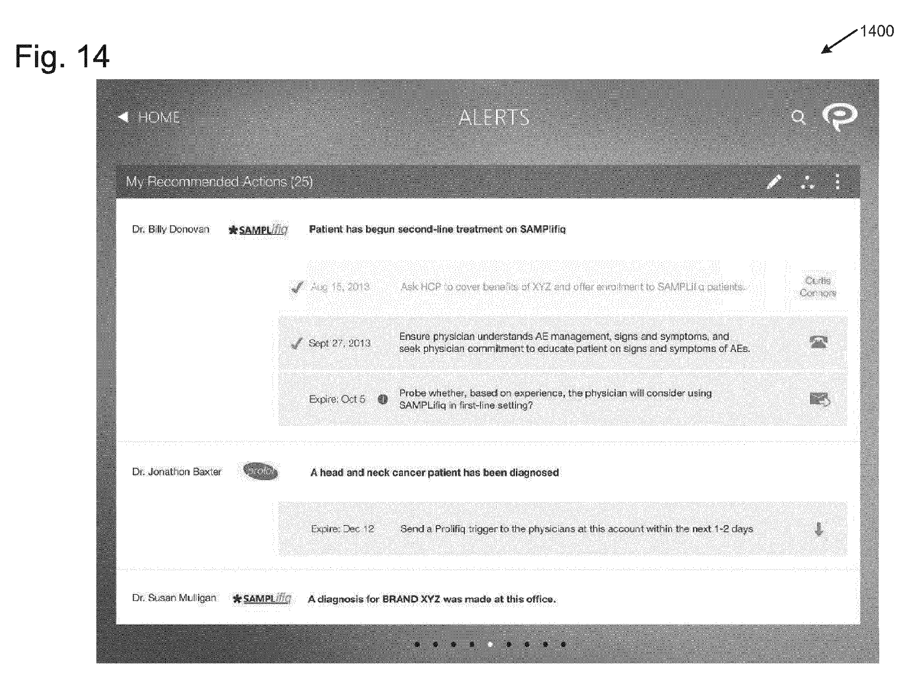

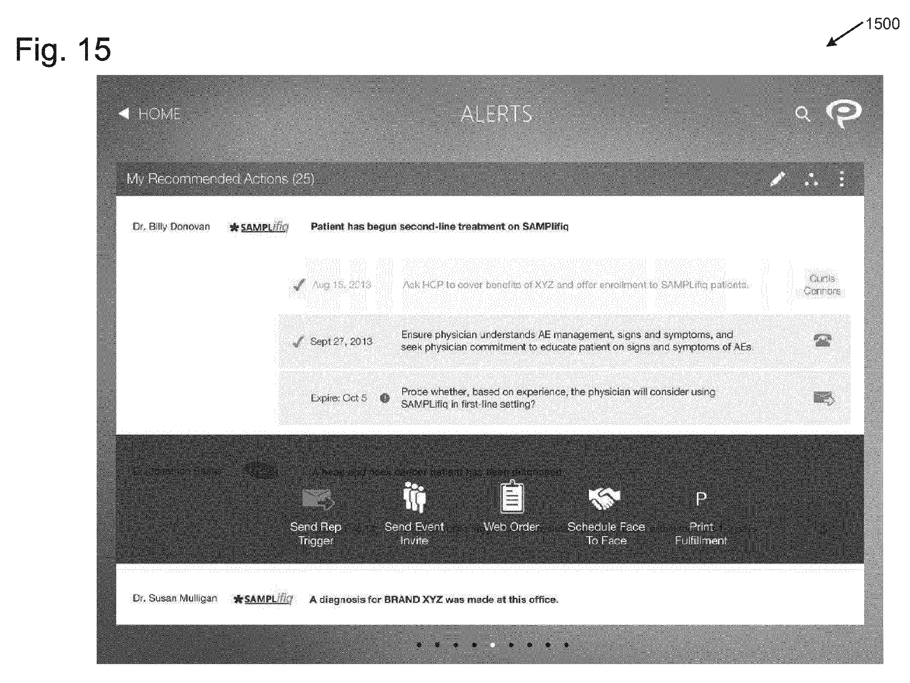

Fig. 10 shows an example user interface of the MDUI 180 where recommended action tiles, similar to those illustrated in Fig. 9, are displayed on a timeline. In various embodiments the tiles may be organized on the timeline according to, for example, a due date or a recommended next action date. Fig. 11 shows an example user interface of the MDUI 180 showing recommended action tiles are shown according to a service professional for whom actions may be performed. As illustrated, in various embodiments, the MDUI 180 may show completed and/or non-completed actions for a particular service professional. As illustrated, the MDUI 180 may also show currently-open actions, such as those actions that have not been completed. Such currently-open action may be shown in the tiles at the bottom of the user interface, which may facilitate a knowledge professional in determining their ability to assign themselves additional actions. Fig. 12 shows an example user interface of the MDUI 180 with additional information about a piece of data and an associated action. As illustrated, the tile may show a recommended due date for the action, as in August 14 for the illustrated example. Fig. 13 shows an alternative example user interface of the MDUI 180, where pieces of data and actions are shown in a list view. It may be recognized that, while particular user interfaces may be illustrated herein, these are not meant to limit the disclosure, either to any particular form of user interface, or to any particular communicated information. Fig. 14 shows an additional example user interface of the MDUI 180 showing managed data along with actions. Fig. 15 shows the example user interface of Fig. 14 along with a set of user interface elements that facilitate the knowledge professional in taking action on the managed data, such as, for example, by sending an event invite, or scheduling a face to face meeting with a service professional.

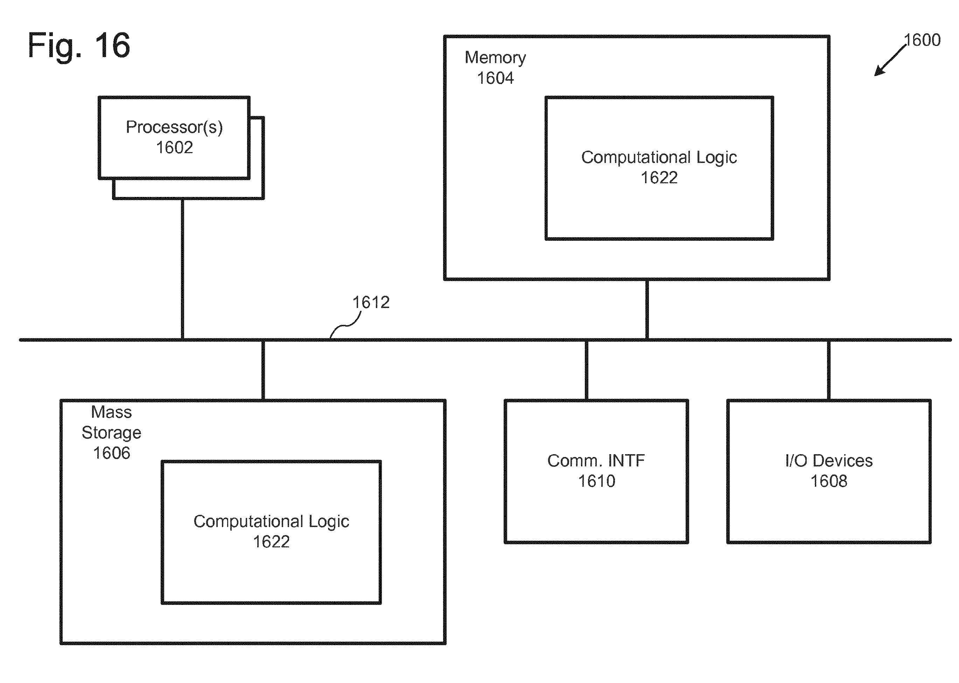

Referring now to Fig. 16, an example computer suitable for practicing various aspects of the present disclosure, including processes described herein, is illustrated in accordance with various embodiments. As shown, computer 1600 may include one or more processors or processor cores 1602, and system memory 1604. For the purpose of this application, including the claims, the terms "processor" and "processor cores" may be considered synonymous, unless the context clearly requires otherwise. Additionally, computer 1600 may include mass storage devices 1606 (such as diskette, hard drive, compact disc read only memory (CD-ROM) and so forth), input/output devices 1608 (such as display, keyboard, cursor control, remote control, gaming controller, image capture device, and so forth) and communication interfaces 1610 (such as network interface cards, modems, infrared receivers, radio receivers (e.g., Bluetooth), and so forth). The elements may be coupled to each other via system bus 1612, which may represent one or more buses. In the case of multiple buses, they may be bridged by one or more bus bridges (not shown).

Each of these elements may perform its conventional functions known in the art. In particular, system memory 1604 and mass storage devices 1606 may be employed to store a working copy and a permanent copy of the programming instructions implementing the operations associated with publishing of managed data as shown in processes described herein. The various elements may be implemented by assembler instructions supported by processor(s) 1602 or high-level languages, such as, for example, C, that can be compiled into such instructions.

The permanent copy of the programming instructions may be placed into permanent storage devices 1606 in the factory, or in the field, through, for example, a distribution medium (not shown), such as a compact disc (CD), or through communication interface 1610 (from a distribution server (not shown)). That is, one or more distribution media having an implementation of the processes described herein may be employed to distribute the programming instructions and program various computing devices.

The number, capability and/or capacity of these elements 1610-1612 may vary, depending on whether computer 1600 is used as an DMM 150 or a MDUI 180. Their constitutions are otherwise known, and accordingly will not be further described.

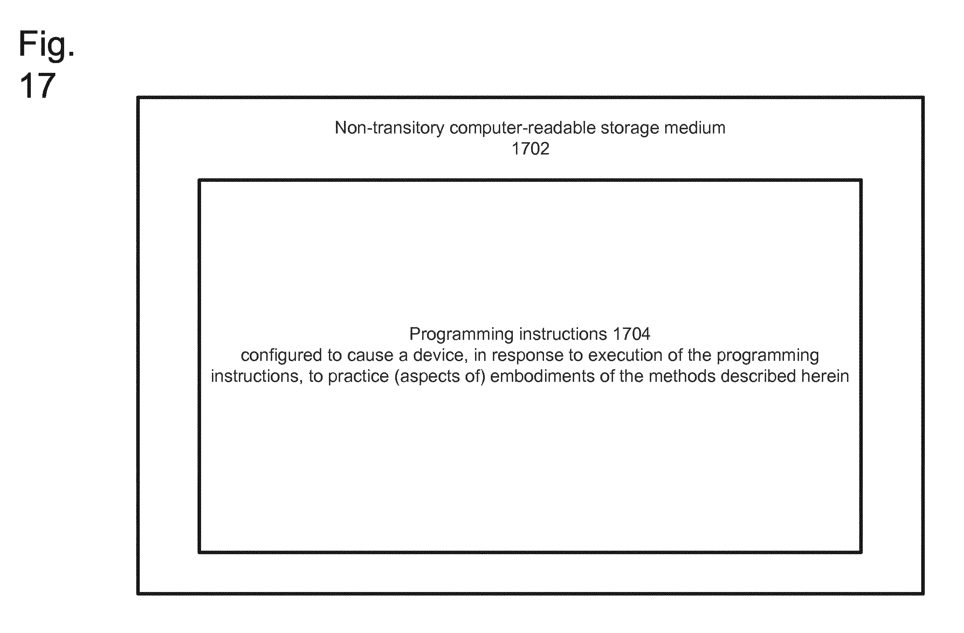

Fig. 17 illustrates an example least one computer-readable storage medium 1702 having instructions configured to practice all or selected ones of the operations associated with the DMM 150 and MDUI 180. As illustrated, least one computer-readable storage medium 1702 may include a number of programming instructions 1704. Programming instructions 1704 may be configured to enable a device, e.g., computer 1600, in response to execution of the programming instructions, to perform, e.g., various operations of processes described herein, but not limited to, to the various operations performed to published managed data. In alternate embodiments, programming instructions 1704 may be disposed on multiple least one computer-readable storage media 1702 instead.

Referring back to Fig. 16, for one embodiment, at least one of processors 1602 may be packaged together with computational logic 1622 configured to practice aspects of processes described herein. For one embodiment, at least one of processors 1602 may be packaged together with computational logic 1622 configured to practice aspects of processes of described herein to form a System in Package (SiP). For one embodiment, at least one of processors 1602 may be integrated on the same die with computational logic 1622 configured to practice aspects of processes of described herein. For one embodiment, at least one of processors 1602 may be packaged together with computational logic 1622 configured to practice aspects of processes of described herein to form a System on Chip (SoC). For at least one embodiment, the SoC may be utilized in, e.g., but not limited to, a computing tablet.

Computer-readable media (including least one computer-readable media), methods, apparatuses, systems and devices for performing the above-described techniques are illustrative examples of embodiments disclosed herein. Additionally, other devices in the above-described interactions may be configured to perform various disclosed techniques.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second or third) for identified elements are used to distinguish between the elements, and do not indicate or imply a required or limited number of such elements, nor do they indicate a particular position or order of such elements unless otherwise specifically stated.

## Claims

1. A method for facilitating sharing of information with service professionals, the method comprising:
receiving, by a computing device, from an electronic data source, information generated for publication to one or more service professionals;
determining, by the computing device, one or more knowledge professionals as recipients of the information, the knowledge professionals chosen at least in part based on associations with one or more service professionals; and
sharing, by the computing device, the information with the one or more knowledge professionals such that the information may be provided by the knowledge professionals to the service professionals.

2. The method of claim 1, further comprising:
generating, by the computing device, one or more alerts for the knowledge professionals; and
sending the generated alerts to one or more computing devices of the one or more knowledge professionals.

3. The method of claim 2, further comprising applying, by the computing device, the one or more business rules to the information to facilitate determination of the one or more knowledge professionals.

4. The method of claim 2, further comprising applying, by the computing device, the one or more business rules to the information to facilitate determination of one or more alerts based on the received information.

5. The method of claim 4, further comprising generation of the one or more determined alerts.

6. The method of claim 3, further comprising receiving, by the computing device, updates on activities of the one or more knowledge professionals.

7. The method of claim 6, wherein applying the one or more business rules comprises applying the one or more business rules to the updates.

8. The method of claim 6, wherein receiving updates comprises receiving updates on activities performed using the shared information on one or more computing devices associated with the one or more knowledge professionals.

9. The method of any preceding claim, wherein sharing the information comprises sharing the information with a user interface on one or more computing devices associated with the one or more knowledge professionals.

10. The method of claim 9, wherein sharing the information comprises sharing the information such that the one or more knowledge professionals may modify the shared information or share the information with other knowledge professionals.

11. The method of any preceding claim, wherein determining one or more knowledge professionals as recipients of the data comprises receiving a determination from a data manager.

12. One or more computer-readable media containing instructions written thereon that, in response to execution on a computing system, cause the computing system to facilitate sharing of information with service professionals by causing the computing system to carry out the method of any preceding claim.

13. An apparatus to facilitate sharing of information with service professionals, the apparatus comprising:
one or more computing processors; and
one or more modules configured to be operated on by the one or more computing processors to carry out the method steps of any one of claims 1 to 11.
